# EUROPÄISCHE PATENTSCHRIFT

(11) **EP 2 990 238 B1**
(45) Veröffentlichungstag und Bekanntmachung des Hinweises auf die Patenterteilung: **02.10.2019**
(21) Anmeldenummer: 15002546.8
(22) Anmeldetag: 28.08.2015
(51) Int. Cl.: B60J 10/40

(54) **DICHTUNGSANORDNUNG SOWIE MIT EINER DICHTUNGSANORDNUNG VERSEHENER PLANENAUFBAU**
SEALING ASSEMBLY, AND CANVAS COVER WITH A SEALING ASSEMBLY
AGENCEMENT D'ETANCHEIFICATION ET SUPERSTRUCTURE POURVUE D'UN AGENCEMENT D'ETANCHEIFICATION

(30) Priorität: 29.08.2014 DE 202014006904 U
(43) Veröffentlichungstag der Anmeldung: 02.03.2016
(73) Patentinhaber: European Trailer Systems GmbH, 47441 Moers (DE)
(72) Erfinder: Remmel, Roger, 42897 Remscheid (DE); Kemmerling, Karl, 42719 Solingen (DE); Arens, Robert, 45899 Gelsenkirchen (DE)
(74) Vertreter: Sparing, Rolf Klaus

(56) Entgegenhaltungen:
- EP-A1- 1 103 392
- EP-A2- 0 121 086
- DE-C- 695 466
- DE-U1- 20 001 578
- GB-A- 1 470 056
- US-A- 4 349 710

## Beschreibung

Die Erfindung betrifft eine Dichtungsanordnung zum Anschluss an ein bewegliches oder feststehendes Aussteifungsglied eines Planenaufbaus, wie er beispielsweise bei einem Bahnwaggon oder einem Lastkraftwagen vorhanden ist. Weiterhin betrifft die Erfindung einen Dichtverbund, der aus zwei Dichtungsanordnungen besteht. Ferner betrifft die Erfindung einen Planenaufbau für ein Transportfahrzeug.

Aus der Praxis sind Bahnwaggons und LKW-Ladeflächen mit einem Planenaufbau bekannt, bei denen der Planenaufbau Dichtungsanordnungen, die aus einem Elastomermaterial hergestellt sind, umfasst. Die Dichtungsanordnungen weisen einen U-förmige Querschnitt auf und sind an ein feststehendes endseitiges Aussteifungsglied verschraubt, wobei ein auf einer Führung verlagerbares Aussteifungsglied zwischen die Schenkel der U-förmigen Dichtungsanordnung unter Ausbildung eines Dichtverbunds hineingedrückt wird. Mittels eines solchen Planenaufbaus können keine Gegenstände, beispielsweise Rohre, mit einer Länge von über 20 Metern mittig auf einen Laderaum aufgebracht werden. Bei den in der Praxis bekannten Bahnwaggons und LKW-Ladeflächen muss die Plane in Richtung einer der Endseiten hin verlagert werden, sodass die Plane zumindest auf dieser einen Endseite einen großen Bereich des Laderaums überdeckt, sodass beispielsweise ein Rohr nicht direkt von oben, z.B. mit einem Kran, in diesen Bereich verladen werden kann. Dies ist auch der Fall, wenn ein Rohr mit einer Länge von über 20 Metern mittig auf den Laderaum geladen werden soll.

DE 298 15 740 U1 zeigt einen Planenaufbau für ein Transportfahrzeug, umfassend eine Plane und ein Verdeckgestell, wobei das Verdeckgestell auf einer Ladefläche angebracht ist. Das Verdeckgestell umfasst zwei endseitige Aussteifungsglieder, welche durch Streben verstärkt und als Spriegel ausgebildet sind. Ein endseitiges Aussteifungsglied ist dabei in Richtung des anderen endseitigen Aussteifungsglieds verlagerbar. Zwischen den beiden zwei endseitigen Aussteifungsgliedern befinden sich weitere verlagerbare Spriegel, wobei die weiteren verlagerbaren Spriegel Hilfsstangen aufweisen, die das Tragen der Plane unterstützen. Zum Schließen wird das verlagerbare endseitige Aussteifungsglied in Richtung einer Wand der Ladefläche verfahren und mittels einer Spannvorrichtung verspannt. Durch das Verspannen wird außerdem fluiddichte Barriere mittels einer Dichtungsanordnung zwischen einer Umwelt und einem Innenraum der Ladefläche geschaffen.

DE 19 27 067 U zeigt eine Dichtungsanordnung zur Abdichtung von Fahrzeugtüren, umfassend zwei Dichtstreifen, von denen mindestens ein Dichtstreifen einen zum anderen Dichtstreifen hin U-förmigen Querschnitt aufweist, wobei an mindestens einem Dichtstreifen mehrere Dichtungslippen angeordnet sind, die bei geschlossener Fahrzeugtür an von lippenfreien und parallel zueinander und zur Richtung der Türverschiebung liegenden Dichtungsflächen des anderen Dichtstreifens anliegen. Dabei können mehrere Dichtungslippen hintereinander angeordnet sein, so dass sich eine Art Labyrinth-Dichtung ergibt. Nachteilig an der gezeigten Dichtungsanordnung ist, dass durch die leicht nachgiebigen Lippen und die Ausgestaltung der Dichtanordnung nach Art einer Labyrinth-Dichtung beispielsweise bei der Verwendung in einem Planenaufbau für einen LKW oder Bahnwaggon eine nicht ausreichende Abdichtung gegen von außen eindringendes Fluid gegeben ist. Insbesondere in den direkt an der Oberseite der Dichtanordnung auftreffendes Regenwasser kann relativ leicht durch die Ansammlung in die vorhandenen Hohlräume eindringen.

DE 298 15 740 U1 zeigt ein Planengestell für einen LKW oder Anhänger, umfassend ein auf entlang der beiden Längsseiten der Ladepritsche angeordneten Lauf- und Führungsschienen verschiebbares endseitiges Aussteifungsglied, an welchem eine bei geschlossenen Verdeck die Ladepritsche beziehungsweise den Laderaum des Fahrzeugs überdeckende Plane mittels halbsteifer Elemente verbunden ist. Zudem umfasst das Planengestell mehrere Schiebebügel und daran angelenkte U-förmige Hilfsbügel. Die Abdichtung der Plane nach unten erfolgt dabei über eine Art Labyrinth-Dichtung, welche über die Befestigung von Drahtseilbügeln an Rollenwangen realisiert ist. Nachteilig an dem gezeigten Planengestell ist, dass keine Abdichtung zwischen den jeweiligen Aussteifungsgliedern erfolgt, sondern nur eine Abdichtung an der Unterseite der Plane entlang der Längsseite der Ladepritsche vorgesehen ist. Somit ist es nicht möglich, zwei Anhänger fluiddicht miteinander über die endseitigen Aussteifungsglieder zu verbinden, wenn besonders lange Teile transportiert werden sollen. Insbesondere ist auch eine abgedichtete Verbindung zwischen Bahnwaggons nicht möglich.

DE 601 02 948 T2 zeigt einen Bahnwagon, umfassen entlang einer Führung bewegliche Abdeckmittel, welche über eine Dichtanordnung, umfassend eine Kantendichtung aus einem elastischen Material, beispielsweise mit einem Mittelbogen eines Güterwagons abgedichtet werden kann. Die Kantendichtung ist dabei im Wesentlichen C-förmig und weist an ihren Endabschnitten Eingriffsansätze auf, die sich längs der Dichtung erstrecken. Die Eingriffsansätze können dabei in eine Passnut eingesetzt werden und bewirkt die Befestigung der Kantendichtung an die beweglichen Abdeckmittel. Die Abdichtung erfolgt dabei durch eine Rollkompression eines Mittelteils der Umfangsfläche der Kantendichtung gegen einen formfesten Waggonrahmen. Nachteilig an dem gezeigten Bahnwaggon ist, dass die Abdichtung nur für formfeste Abdeckungen, wie beispielsweise einen Plattenaufbau, möglich ist. Die Abdichtungsanordnung ist daher bei der Verwendung von elastischen Planen nicht wirksam einsetzbar.

US 2005 0 274 279 A1 zeigt einen Planenaufbau für ein Güter aufnehmendes Transportfahrzeug, insbesondere einen Bahnwaggon, umfassend ein bewegliches Verdeckgestell für eine Plane, wobei die Plane schnell von einen ausgebreiteten Zustand zu einem zusammengefalteten Zustand verbracht werden kann. Im zusammengefalteten Zustand ist zudem ein Verfahren der Plane zwischen zwei endseitigen Aussteifungsgliedern möglich. Die Plane kann im ausgebreiteten Zustand an den endseitigen Aussteifungsgliedern befestigt werden. Die Abdichtung des Transportraums innerhalb der ausgebreiteten Plane erfolgt dabei derart, dass die Plane mittels eines an der Plane angrenzenden Flügelflansches mit dem jeweiligen endseitigen Aussteifungsglied verbunden wird.

GB 2 199 549 A zeigt einen Planenaufbau für ein Transportfahrzeug, insbesondere für einen Bahnwaggon, umfassend ein Verdeckgestell mit mehreren Aussteifungsgliedern, welche auf Schlitten entlang von Führungen verlagerbar sind. Eine Abdichtung des Planenaufbaus erfolgt dabei über das Vorspannen der Plane mittels eines Seils gegen den Rahmenbereich der Ladepritsche. Endseitige Aussteifungsglieder werden hingegen durch Andrücken gegen beispielsweise ein endseitiges Portal des Bahnwaggons abgedichtet. Das Andrücken erfolgt dabei mittels eines am Portal angeordneten Hakens, welcher wiederum über Gelenke und einen Hebel in Schließrichtung der Plane vorspannbar ist. Der Haken rastet beim Verfahren des endseitigen Aussteifungsgliedes in ein an dem Aussteifungsglied angeordneten Raste ein und bildet so die Verbindung zwischen Portal und endseitigem Aussteifungsglied.

DE 10 2013 012 386 A1 zeigt einen Planenaufbau, umfassend eine Plane, welche in einem Anlageabschnitt zwischen einer Klemmleiste, welche als Strangpressprofil aus Aluminium hergestellt ist, und einem Einspannglied klemmend fixiert werden kann. Nachteilig hierbei ist, dass eine abgedichtete Verbindung zweier aneinander angrenzender Planen, welche jeweils an einander zugewandten Anlageabschnitten fixiert sind, nicht bereitgestellt werden kann. Zudem besteht aufgrund der Fixierung der Plane über die Verklemmung eine erhöhte Gefahr des Verschleisses der Plane.

DE 10 2011 002 118 A1 zeigt eine Dichtungsanordnung für eine Fahrzeugtür, umfassend einen ersten Dichtstreifen aus einem gummieleastischen Material, welche eine Aufnahme für einen Vorsprung eines zweiten Dichtstreifen aufweist. Die Aufnahme weist dabei mehrere abstehende Dichtlippen auf, welche durch den Vorsprung des zweiten Dichstreifens im geschlossenen Zustand der Fahrzeugtür verlagert werden und so eine Abdichtung der nach außen erfolgt. Nachteilig ist hierbei, dass hier aufgrund der vorhandene Hohlräume zwischen dem ersten und zweiten Dichtstreifen und den leicht nachgebenden Lippen eine Dichtung gegenüber Regenwasser an der Oberseite zweier über eine solche Dichtanordnung verbundenden Dachplanen, beispielsweise für eine Verdeckanordnung eines Bahnwaggons, nicht geeignet ist.

DE 22 06 558 A zeigt eine Dichtungsanordnung, umfassend ein Aussteifungsglied an welchen über ein Anschlussteil zwei Dichtstreifen, welche in Längsnuten befestigt sind, aufweist. Die Dichtstreifen sind hierbei als Einziehfahnen ausgebildet, welche eine Abdichtung eines Scheibenrahmens einer Frontscheibe gegenüber einer rahmenlosen Seitenscheibe eines Verdeckes beispielsweise eines LKWs bereitstellt. Nachteilig an der Dichtungsanordnung ist, dass zwischen den beiden Dichtstreifen eine großer Zwischenraum besteht, der insbesondere dann äußerst uneffektiv ist, wenn die Dichtanordnung zur Abdichtung einer Deckenplane oder den Übergang zwischen zwei angrenzenden Dachplanen verwendet wird. Zudem ist die gezeigte Dichtanordnung nicht geeignet parallel zueinander verfahrbare Bauteile gegeneinander abzudichten.

DE 33 12 001 A1 zeigt einen Bahnwaggon, umfassend einer aus Laufschienen und Laufrollen bestehenden Führung auf der eine Ladefläche abdeckende Hauben verlagerbar sind, einem Mittelportal und einer endseitigen Stirnwand, mit welcher die Hauben form- und kraftschlüssig verklammert werden können. Die Hauben sind dabei übereinander schiebbar ausgebildet. In Schließstellung der Haube liegt diese gegen elastische Anschläge der Stirnwand an. Eine Abdichtung der Verbindungsstelle zwischen der Stirnwand und Haube erfolgt dabei über eine metallische Labyrinthdichtung. Nachteilig dabei ist, dass Labyrinthdichtung insbesondere im Dachbereich keine ausreichende Dichtung für sich auf der Verbindungsstelle sammelndes Regenwasser bereitstellt.

### Nächstliegendes Stand der Technik Dokument

US 4,349,710 A zeigt eine Dichtungsanordnung zum Anschluss an eine seitlich bewegbare Tür, wobei die Dichtungsanordnung einen Dichtstreifen umfasst, wobei der Dichtstreifen zumindest entlang einer Erstreckung des Dichtstreifens verlaufende erste und zweite Vorsprünge und zumindest entlang der Erstreckung des Dichtstreifens verlaufende erste und zweite Vertiefungen aufweist. Die an dem Dichtstreifen vorgesehenen Vorsprünge bzw. Vertiefungen sind dabei derart komplementär ausgebildet, dass jeweils jede der ersten und zweiten Vertiefungen als Negativform eines der Vorsprünge ausgebildet ist und ineinander passend eine Abdichtung ermöglichen. Der Dichtstreifen umfasst dabei weiter einen Seitenwände umfassenden Mantelbereich, wobei an der den Vorsprüngen abgewandten Seite der Dichtungsanordnung eine Aufnahme gezeigt ist, in der eine aus Schaumstoff bestehendes Aussteifungsglied eingeschlossen ist.

DE 200 01 578 U1 zeigt einen Planenaufbau für ein Transportfahrzeug, insbesondere einen Bahnwaggon, mit einem Verdeckgestell mit zumindest einem endseitigen Aussteifungsglied für den Anschluss einer Plane, wobei das Aussteifungsglied beidseitig mit jeweils einem Schlitten, der entlang von Führungen verlagerbar ist, versehen ist.

DE 695 466 C zeigt eine Dichtungsanordnung zum Anschluss an ein bewegliches oder feststehendes Aussteifungsglied eines Planenaufbaus, insbesondere für Kraftfahrzeuge. Die Dichtungsanordnung umfasst dabei einen Dichtstreifen, wobei der Dichtstreifen zumindest entlang einer Erstreckung des Dichtstreifens verlaufende erste und zweite Vorsprünge und zwischen den Vorsprüngen und entlang der Erstreckung des Dichtstreifens verlaufende erste und zweite Vertiefungen aufweist. Dabei sind die Vorsprünge und die dazu korrespondierenden Vertiefungen derart komplementär ausgebildet, dass jeweils jede der ersten und zweiten Vertiefungen als Negativform eines der Vorsprünge ausgebildet ist und ineinander passend eine Abdichtung ermöglichen. Der Dichtstreifen ist dabei auf Metallleisten mittels Gummischweißung angebracht. Alternativ hierzu sind zudem Befestigungen der Dichtstreifen über übergreifende Metallwinkelleisten gezeigt.

GB 1 470 056 zeigt eine Dichtungsanordnung zum Anschluss an eine seitlich bewegbare Tür, wobei die Dichtungsanordnung einen Dichtstreifen umfasst, wobei zumindest entlang einer Erstreckung des Dichtstreifens 11 verlaufende erste und zweite Vorsprünge und zumindest entlang der Erstreckung des Dichtstreifens verlaufende erste und zweite Vertiefungen vorgesehen sind. Dabei weist der erste Vorsprung eine in etwa dreieckige Querschnittsform, wohingegen der zweite Vorsprung einen eher runden Querschnitt aufweist. Der Dichtstreifen weist dabei einen Mantelbereich auf, wobei an der den Vorsprüngen abgewandten Seite der Dichtungsanordnung eine Aufnahme angeordnet ist. Die Aufnahme wird dabei im Wesentlichen von dem Mantelbereich abgegrenzt.

EP 1 103 392 A1 zeigt eine Dichtungsanordnung für einen Planenaufbau, umfassend ein flexibel ausgebildetes Dichtungselement, welches als elastisches Klemmelement ausgebildet ist, wobei das Klemmelement einen Vorsprung aufweist, welcher mit einem Endbereich einer Plane dichtend zusammenwirken kann. Hierzu ist in dem Endbereich der Plane eine Aufnahme vorgesehen, in welcher der Vorsprung einführbar ist. Die Abdichtung der Plane erfolgt dabei durch ein Umgreifen des Endbereichs der Plane durch zwei Außenschenkel des Dichtungselementes, welche einen im Wesentlichen L-förmigen Querschnitt aufweisen. Die Endabschnitte der L-förmigen Schenkel hintergreifen dabei den Endabschnitt der Plane und sind dabei komplementär zu entsprechenden Vertiefungen der Plane ausgebildet.

EP 0 121 086 A2 zeigt einen Bahnwaggon mit in Schließstellung in einer Ebene liegenden und über auf Laufschienen laufenden Laufrollen übereinander verschiebbaren Hauben, wobei die Hauben über eine Betätigungseinrichtung aus der Schließstellung mit ihren Laufrollen auf die Laufschienen in die Verschiebestellung anhebbar, ausschwenkbar und absetzbar ist. Weiter sind in einem endseitigen Bereich der Haube durchgehende Längsträger gezeigt, wobei an dem rippenförmig bis zu Anschlussprofilen der Längsseiten jeder Hälfte der Haube verlaufende Spriegel fest angeordnet sind.

Es ist die Aufgabe der Erfindung, eine Dichtungsanordnung bzw. einen Planenaufbau anzugeben, die eine zuverlässige Abdichtung beweglicher Teile ermöglichen.

Diese Aufgabe wird erfindungsgemäß durch eine Dichtungsanordnung bzw. einen Dichtverbund bzw. einen Planenaufbau mit den Merkmalen der unabhängigen Ansprüche 1, 10 und 11 gelöst.

Gemäß einem Aspekt der Erfindung ist eine Dichtungsanordnung zum Anschluss an ein bewegliches oder feststehendes Aussteifungsglied eines Planenaufbaus geschaffen, die einen Dichtstreifen umfasst, wobei der Dichtstreifen einen Mantelbereich und zumindest entlang einer Erstreckung des Dichtstreifens verlaufende erste und zweite Vorsprünge und zumindest entlang der Erstreckung des Dichtstreifens verlaufende erste und zweite Vertiefungen aufweist. Dabei ist vorgesehen, dass die Vorsprünge und die Vertiefungen derart komplementär ausgebildet sind, dass jeweils jede der ersten und zweiten Vertiefungen als Negativform eines der Vorsprünge ausgebildet ist und ineinander passend eine Abdichtung ermöglichen. Hierbei ist die Aufnahme an der den Vorsprüngen des Dichtstreifens abgewandten Seite der Dichtungsanordnung für ein Aussteifungsglied, wie einen Spriegel oder Bügel, vorgesehen. Dabei ist die Aufnahme kreisförmig ausgebildet und der Mantelbereich weist größtenteils eine kreisförmige Form auf, welche durch eine Öffnung durchbrochen ist. Der Mantelbereich weist dabei angrenzend zu der Öffnung eine Krümmung auf, die einen Fortsatz des Mantelbereiches in die kreisförmige Aufnahme der Dichtungsanordnung umlegt.

Vorteilhaft kann eine solche Dichtungsanordnung leicht und in prinzipiell beliebiger Länge mittels Extrusion hergestellt werden. Voreilhaft kann die Dichtungsanordnung zudem beidseitig verwendet werden, sodass ein Dichtungsverbund aus zwei Dichtstreifen bestehen kann, bei dem ein Dichtungsstreifen mit einem weiteren Dichtungsstreifen abdichtend wirkt.

Vorteilhaft ermöglicht eine solche Dichtungsanordnung, dass der Planenaufbau eines Bahnwaggons oder eines LKWs in der Mitte eines Transport- bzw. Laderaums mit einer komplementär angeordneten identisch ausgebildeten Dichtungsanordnung einen wasserdichte Barriere ausbildet, indem beide Dichtungsanordnungen durch den Druck von Aussteifungsgliedern, welche als Spriegel ausgebildet sein können, zusammengedrückt werden, sodass die Vorsprünge und Vertiefungen komplementär und fluiddicht zueinander entlang ihrer Erstreckung ineinander greifen.

Umfasst die Dichtungsanordnung mehrere Vorsprünge und Vertiefungen, so gelangt Wasser vorteilhaft selbst dann nicht in einen Laderaum, wenn es ein erste Dichtpaar, bestehend aus einem Vorsprung eines ersten Dichtstreifens und einem Vorsprung eines zweiten Dichtstreifens, überwunden hat. Das Wasser oder auch eine andere Flüssigkeit kann in der Folge entlang der Erstreckung einer weiteren Vertiefung oder eines weiteren Vorsprungs seitlich abfließen.

Vorzugsweise weist der Dichtstreifen drei Vorsprünge und jeweils eine Vertiefung zwischen zwei benachbarten Vorsprüngen entlang seiner Erstreckung auf. Der Dichtstreifen kann jedoch auch vier oder fünf Vorsprünge aufweisen, wobei jeweils eine Vertiefung zwischen zwei benachbarten Vorsprüngen entlang der Erstreckung des Dichtungsstreifens vorgesehen ist. Bevorzugt werden drei Vorsprünge vorgesehen, da dadurch eine Abknickwahrscheinlichkeit gegenüber vier oder fünf Streifen verringert wird.

Zweckmäßigerweise weist der Dichtstreifen der Dichtungsanordnung zumindest eine Rinne auf, die entlang der Erstreckung des Dichtstreifens verläuft, wobei die Rinne an einer zu den Vorsprüngen und Vertiefungen im Wesentlichen senkrechten Außenseite des Dichtstreifens angeordnet ist. Die Rinne dient dem Zweck, dass beispielsweise Regenwasser von einem Bereich, in welchem sich zwei Dichtungsanordnungen zum Abdichten einander berühren, abgeführt wird. Weist die Form des Aussteifungsglieds in der Mitte über die Erstreckungslänge ein Höhenmaximum aus, so kann beispielsweise Wasser noch besser entlang der Rinne abfließen.

In einer vorteilhaften Ausgestaltung der Dichtungsanordnung weist der Dichtstreifen eine durch eine Ebene parallel zu der Erstreckung des Dichtstreifens abgegrenzten ersten Abschnitt und einen zweiten Abschnitt auf, wobei der erste Abschnitt die Negativform des zweiten Abschnitts bildet. Vorteilhaft kann so erreicht werden, dass zwei Dichtstreifen, welche dieses Merkmal aufweisen, miteinander über den ersten und zweiten Abschnitt verlaufenden Bereich einen dichtenden und vollflächigen Kontakt ermöglichen. Dies ermöglicht auch die gegenseitige Abdichtung zueinander beweglicher Teile über den vollflächigen Kontakt zwischen den Vertiefungen des ersten Abschnittes und den Vorsprüngen des zweiten Abschnittes.

Zweckmäßigerweise sind die Vorsprünge des Dichtstreifens der Dichtungsanordnung so ausgebildet, dass sie im Wesentlichen einen dreieckigen Querschnitt aufweisen. Vorteilhaft ermöglicht der dreieckige Querschnitt, dass zwei Dichtungsanordnungen zueinander zentriert werden, wenn die Vorsprünge einer ersten Dichtungsanordnung in die Vertiefungen einer zweiten Dichtungsanordnung eingeführt werden.

Vorzugsweise ist der einen im Wesentlichen dreieckigen Querschnitt aufweisende Dichtstreifen so ausgebildet, dass zumindest eine Flanke von einem von ersten und zweiten Vorsprüngen und zumindest eine Flanke von dem anderen von ersten und zweiten Vorsprüngen in parallelen Ebenen liegen. Hierdurch wird die Zentrierung der beiden Dichtungsanordnungen besonders genau und gleichzeitig eine vollflächige Dichtung erreicht.
Gemäß einer bevorzugten Ausgestaltung der Dichtungsanordnung ist an der den Vorsprüngen abgewandten Seite des Dichtstreifens ein Anschlussteil in einem Mantelbereich des Dichtstreifens angeordnet, wobei der Dichtstreifen und das Anschlussteil eventuell zusätzlich miteinander verbunden sind. Vorteilhaft verleiht das Anschlussteil der Dichtungsanordnung Stabilität und Steifigkeit. In einem gekrümmten Bereiche der Dichtungsanordnung ist das Anschlussteil entweder aus dem Mantelbereich entfernt oder das Anschlussteil ist in der Form von mehreren dünnen Spangen ausgebildet, die eine Krümmung ermöglichen.

Bevorzugt ist vorgesehen, dass das Anschlussteil die Aufnahme für das Aussteifungsglied verstärkend aussteift. Wird das Aussteifungsglied entlang einer Führung verlagert, so wird diese Bewegung durch das Aussteifungsglied auf die Dichtungsanordnung übertragen.

Gemäß einer bevorzugten Ausgestaltung ist eine Breite des Dichtstreifens senkrecht zu seiner Erstreckungsrichtung und entlang einer Linie, die durch Spitzen von zumindest zwei Vorsprüngen verläuft, in etwa doppelt so groß wie der Abstand zwischen einer Spitze eines der Vorsprünge und einem Teil einer benachbarten Vertiefung. Vorteilhaft wird dadurch im Falle einer elastischen Dichtungsanordnung eine notwenige Stabilität der Dichtungsanordnung senkrecht zur Erstreckungsrichtung der Vorsprünge gewährleistet.

Bevorzugt besteht der Dichtstreifen der Dichtungsanordnung aus einem deformierbaren Elastomermaterial. Das deformierbare Elastomermaterial gewährleistet einen zusätzlichen Dämpfungseffekt und kann Flüssigkeiten zuverlässig abdichten, da es durch seine Deformierbarkeit in kleinere Hohlräume eindringt und diese abdichtet. Vorteilhaft stellen dadurch auch leicht überstehende Maße kein Problem dar. Das Elastomermaterial ist nämlich in der Lage, sich bei einem Druck in eine Verschlussrichtung in eine Richtung senkrecht zur Erstreckungsrichtung der Vorsprünge und senkrecht zu der Verschlussrichtung auszudehnen, sodass eine Dichtwulst ausgebildet wird, welche eine kleine Erhebung der Dichtungsanordnung entlang der Erstreckungsrichtung der Vorsprünge ausbildet. Vorteilhaft ist dadurch eine Flüssigkeit, welche sich in der Rinne befindet, noch besser daran gehindert, in einen Zwischenraum des Dichtpaares zu fließen. Alternativ kann die Dichtungsanordnung aus einem Verbund von Metall und Kunststoff oder nur aus einem metallischen Material hergestellt werden, wobei im letzteren Fall überstehende Maße nicht so effektiv kompensiert werden können.

In einer bevorzugten Ausgestaltung der Dichtungsanordnungen bilden zwei komplementäre Dichtstreifen zusammengreifend einen Dichtverbund. Die Vorsprünge des einen Dichtstreifens sind hierbei mit den Vertiefungen des anderen Dichtstreifens in Kontakt. Zugleich bedingt die dreieckige Querschnittsform der Vorsprünge auch eine Zentrierung, wenn beide Dichtstreifen miteinander in Kontakt gebracht werden. Eine zu hohe Anzahl an Vorsprüngen ist hierbei nicht zwingend vorteilhaft. Da eine Gesamtgröße des Dichtverbunds möglichst klein gehalten werden soll, würden die einzelnen Vorsprünge und Vertiefungen, bei einer Erhöhung der Anzahl der Vorsprünge und Vertiefungen, deutlich schmaler werden. Schmalere Vorsprünge können mechanisch aber leichter brechen oder knicken als dickere Vorsprünge und erfüllen auch eine Zentrierungsfunktion nicht so effektiv, da sie biegsamer sind und deswegen leichter nachgeben.

Ein erfindungsgemäßer Dichtverbund besteht aus zwei erfindungsgemäßen Dichtungsanordnungen. Die beiden Dichtungsanordnungen greifen komplementär ineinander. Zu diesem Zweck sind die Dichtungsanordnungen quer zu der Erstreckungsrichtung der Vorsprünge leicht versetzt angeordnet, um zu verhindern, dass bei einem Zusammenführen der beiden Dichtungsanordnungen vordere Kante der Vorsprungs einer ersten Dichtungsanordnung auf einen vordere Kante der Vorsprungs einer zweiten Dichtungsanordnung treffen und sich gegenseitig verkanten. Alternativ weisen die erste und die zweite Dichtungsanordnungen ein asymmetrisches Profil der Vorsprünge und Vertiefungen dergestalt auf, dass beide so orientierbar sind, dass selbst bei einer gleichen Höhe der Dichtungsanordnungen die Vorsprünge einer ersten Dichtungsanordnung vorteilhaft auf komplementäre Vertiefungen der anderen Dichtungsanordnung und nicht auf deren Vorsprünge treffen. In beiden Fällen schieben sich die Vorsprünge der beiden Dichtungsanordnungen keilförmig übereinander.

Die Verwendung eines Dichtverbunds zur Herstellung einer dichten Verbindung umfasst zwei jeweils eine Dichtungsanordnung tragende Teile, insbesondere bewegliche Anschlussteiler eines Planenaufbaus, wie einen Bügel, einen Spriegel oder ein feststehendes Endglied eines Planenaufbaus. Wenn jeweils zwei Spriegel eine Dichtungsanordnung aufweisen, kann der Dichtverbund auch in der Mitte eines Transport- oder Laderaums verschlossen werden, indem die Dichtungsanordnungen tragenden Teile stirnseitig aufeinander zu bewegt und gegeneinander verspannt werden. Dies ermöglicht vorteilhaft, dass Gegenstände mit einer Länge von über 20 Metern auf dem Laderaum verstaut und abgedeckt werden können.

Gemäß einem Aspekt der Erfindung ist ein Planenaufbau für ein Transportfahrzeug, insbesondere einen Bahnwaggon, geschaffen. Der Planenaufbau umfasst ein Verdeckgestell mit zumindest einem endseitigen Aussteifungsglied für den Anschluss einer Plane, wobei das Aussteifungsglied beidseitig mit jeweils einem Schlitten, der entlang von Führungen verlagerbar ist, verbunden ist, wobei zumindest an dem endseitigen Aussteifungsglied eine Dichtungsanordnung angeschlossen ist. Durch den Anschluss der Plane mittels des Aussteifungsglieds wird zugleich eine wasserdichte Verbindung zwischen der Plane und der Dichtungsanordnung geschaffen.

Hierdurch wird ein Planenaufbau für ein Transportfahrzeug, insbesondere einen Bahnwaggon, geschaffen. Der Planenaufbau umfasst eine Plane und ein Verdeckgestell mit zumindest einem endseitigen Aussteifungsglied für den Anschluss der Plane, wobei das Aussteifungsglied beidseitig mit jeweils einen Schlitten, der entlang von Führungen verlagerbar ist, versehen ist, wobei an dem endseitigen Aussteifungsglied eine Dichtungsanordnung angeschlossen ist, die einen Elastomerstreifen mit zumindest zwei entlang der Erstreckung verlaufenden, von dem Aussteifungsglied fort weisenden Vorsprüngen und zumindest einer entlang der Erstreckung des Elastomerstreifens verlaufenden Vertiefung aufweist, wobei die Vorsprünge und Vertiefungen in eine Verlagerrichtung des Schlittens weisen.

Vorzugsweise weist die vorstehend beschriebene Dichtungsanordnung des Planenaufbaus ineinander passende Vorsprünge und Vertiefungen zur Ausbildung einer wasserdichten Barriere auf. Dadurch, dass die Vorsprünge und Vertiefungen ineinanderpassen, wird vorteilhaft eine besonders effektive Abdichtfunktionalität erzielt. Gemäß dem Fall, dass die Vorsprünge und Vertiefungen nicht ineinanderpassen, könnte eine Flüssigkeit in den kontaktfreien Bereichen ungehindert fließen. Eine Mehrzahl an Vorsprüngen verhindert zudem, dass die Flüssigkeit in einen Laderaum gelangt auch wenn ein erster Dichtungsabschnitt, bestehend aus einem ersten Vorsprung und einer ersten Vertiefung, schon von der Flüssigkeit passiert wurde.

Zweckmäßigerweise weist der Planenaufbau ein Anschlussteil in einem Mantelbereich der Dichtungsanordnung auf. Das Anschlussteil dient zur Versteifung der Dichtungsanordnung, sodass insbesondere das Aussteifungsteil stabil in die Dichtungsanordnung aufgenommen werden kann. Der Mantelbereich und auch das Anschlussglied sind hierbei variabel ausgebildet, sodass wahlweise ein im Querschnitt rechteckiges oder ein im Querschnitt kreisförmiges Aussteifungsteil in den Mantelbereich aufgenommen werden kann. Im Fall eines im Querschnitt rechteckigen Aussteifungsglieds sind der Mantelbereich und das Anschlussglied im Querschnitt ebenfalls rechteckig ausgebildet. Im Fall eines im Querschnitt kreisförmigen Aussteifungsglieds sind der Mantelbereich und das Anschlussglied im Querschnitt ebenfalls kreisförmig ausgebildet.

Gemäß einer bevorzugten Ausgestaltung des Planenaufbaus weist die Aufnahme und/oder das Anschlussteil ein an die Gestalt des Aussteifungsglieds angepasstes Querschnittsprofil auf, welches eine Öffnung in Richtung des Aussteifungsglieds aufweist. Dies gewährleistet vorteilhaft, dass verschieden geformte Aussteifungsglieder bündig bzw. federnd in die Aufnahme und/oder das Anschlussteil aufgenommen werden können.

Zweckmäßigerweise weist das Anschlussteil angrenzend zu der Öffnung Rasten auf, die das Aussteifungsglied innerhalb des Anschlussteils fixieren. Die Rasten sind vorzugsweise in der Form eines Clipsverschlusses ausgebildet. Das Aussteifungsglied kann durch Ausübung einer moderaten Kraft in das Anschlussteil eingeführt werden, wobei eine Bewegung in eine Gegenrichtung bei Anwendung einer gleichgroßen antiparallelen Kraft jedoch durch einen Formschluss blockiert ist. Im Falle eines Kraftschlusses kann das Aussteifungsglied im Regelfall mit der gleichgroßen antiparallelen Kraft wieder aus dem Anschlussteil herausgeführt werden.

Zweckmäßigerweise ist das Aussteifungsglied durch die Rasten formschlüssig in dem Anschlussteil fixiert. In diesem Fall weist das Aussteifungsglied bevorzugt die Form eines Vierkants auf, wobei das Anschlussteil ein rechteckiges Querschnittsprofil mit einer an das Aussteifungsglied angepasste Öffnung aufweist.

Alternativ ist das Aussteifungsglied durch die Rasten kraftschlüssig in dem Anschlussteil fixiert. In diesem Fall weist das Aussteifungsglied bevorzugt die Form eines zylindrischen Rohrs auf, wobei das Anschlussteil ein kreisförmiges Querschnittsprofil mit einer an das Aussteifungsglied angepasste Öffnung aufweist. Das Anschlussteilwirkt hierbei in der Art einer Feder.

Alternativ kann das Aussteifungsglied auch mit einer Schraube mit dem Anschlussteil verschraubt werden, wobei in diesem Fall zusätzliche Löcher bzw. Gewindebohrungen vorgesehen sind.

Zweckmäßigerweise ist eine Plane zwischen dem Aussteifungsglied und dem Anschlussteil festgelegt. Dies gewährleistet, dass die Plane einer Verlagerungsbewegung des Anschlussteils folgt und so über den Lade- bzw. Transportbereich verlagerbar und spannbar ist und den Lade- bzw. Transportbereich abdichtet.

Bevorzugt ist das Aussteifungsglied des Planenaufbaus als Spriegel oder Bügel oder als Teil eines Spriegels oder Bügels ausgebildet, wobei das Aussteifungsglied einen Querschnitt in Form eines Vierkants oder eines zylindrischen Rohrs aufweisen kann. Ein Spriegel ist beispielsweise als ein verlagerbares, im Wesentlichen langgestrecktes Stützteil einer Plane ausgebildet, ein Bügel ist beispielsweise als ein im Wesentlichen U-förmiges verlagerbares Stützteil für eine Plane ausgebildet.

Zweckmäßigerweise ist an dem Planenaufbau ein weiterer Elastomerstreifen an einem beweglichen oder festen Bauteil angeordnet, wobei beide Elastomerstreifen mittels einer Spanneinrichtung gegenseitig abdichtend verspannbar sind. Gemäß einer bevorzugten Ausgestaltung des Planenaufbaus umfasst die Spannvorrichtung zwei Scharniere und einen Hebel, wobei die Spannvorrichtung von einem Schutzblech umgeben ist und das Schutzblech auf einer der Dichtung abgewandten Seite der Spanneinrichtung angeordnet ist. Das Schutzblech bietet vorteilhaft einen Schutz vor mechanischen Beschädigungen der Elastomerstreifen, zudem gewährleistet eine Hebelwirkung der Spanneinrichtung, dass die Dichtungsanordnung mit hoher Kraft verspannt werden kann, sodass eine Abdichtungsfähigkeit nochmals erhöht wird.

Gemäß einem Aspekt der Erfindung umfasst der Bahnwaggon zumindest einen vorstehend beschriebenen Planenaufbau.

Gemäß einem Aspekt der Erfindung ist ein Bahnwaggon geschaffen, der eine Führung, entlang derer zumindest ein Planenaufbau verlagerbar ist, umfasst, wobei zwei Planenaufbauten auf der Führung angeordnet sind, die in einem Stoßbereich der zueinander zugekehrten Stirnseiten durch jeweils eine Dichtungsanordnung gegenseitig abdichtbar sind. Die Dichtungsanordnung ist hierbei vorzugsweise wie weiter oben beschrieben ausgebildet. Besonders vorteilhaft wird so eine Abdichtung zwischen den einander zugekehrten Stirnseiten erreicht, welche im Gegensatz zu üblicherweise verwendeten Labyrinthdichtungen über einen vollflächigen Kontakt und über einen großen Querschnittsbereich zuverlässig gegen eindringendes Wasser schützt. Vorteilhaft kann so ein geschlossener Bahnwaggon bereitgestellt werden, der in der Lage ist, sehr lange Gegenstände abzudecken.

Zweckmäßigerweise weisen beide Planenaufbauten des Bahnwaggons an einander abgekehrten Stirnseiten eine weitere Dichtungsanordnung auf. Dadurch wird erreicht, dass der Bahnwaggon vorteilhaft sowohl in der Mitte als auch an beiden Endbereichen öffenbar und wieder fluiddicht verschließbar ist, sodass bei einem Beladungsvorgang eine große Flexibilität erzielt wird.

In einer weiteren bevorzugten Ausgestaltung des Bahnwaggons ist eine Spannvorrichtung im Bereich der einander zugekehrten Stirnseiten zum gegenseitigen Spannen und Verriegeln vorgesehen.

Weitere Vorteile, Eigenschaften und Weiterbildungen der Erfindung ergeben sich aus den abhängigen Ansprüchen sowie aus der nachstehenden Beschreibung eines bevorzugten Ausführungsbeispiels.

Die Erfindung wird nachstehend unter Bezugnahme auf die anliegenden Zeichnungen anhand eines bevorzugten Ausführungsbeispiels näher erläutert.
- Fig. 1: zeigt einen Querschnitt durch eine Dichtungsanordnung.
- Fig. 2: zeigt einen Querschnitt der Dichtungsanordnung aus Fig.1 mit einer Plane.
- Fig. 3: zeigt einen Querschnitt durch einen Dichtungsverbund, der zwei Dichtungsanordnungen gemäß Fig. 1 umfasst.
- Fig. 4: zeigt eine Draufsicht auf eine Spanneinrichtung, die den Dichtverbund aus Fig. 3 verspannt.
- Fig. 5: zeigt eine Seitenansicht eines Planenaufbaus eines Bahnwaggons.
- Fig. 6: zeigt einen Längsschnitt durch den Planenaufbau aus Fig. 5 entlang der Achse A aus Fig. 5.
- Fig. 7: zeigt einen Querschnitt durch den Dichtverbund entlang der Achse C aus Fig. 6.
- Fig. 8: zeigt eine perspektivische Ansicht eines Bahnwaggons ohne Plane.
- Fig. 9: zeigt einen Querschnitt durch ein weiteres Ausführungsbeispiel einer Dichtungsanordnung gemäß Fig. 1.

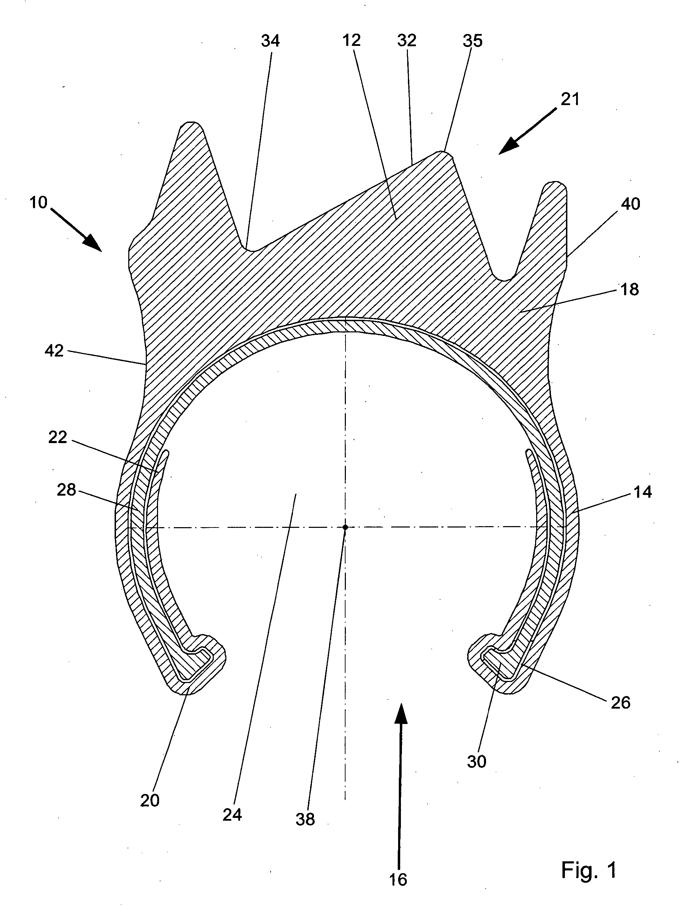

Fig. 1 zeigt einen Querschnitt durch eine langgestreckte Dichtungsanordnung 10 quer zu einer Erstreckung. Die Dichtungsanordnung 10 umfasst einen Bereich mit einem hügelförmigen, insbesondere dreieckigen, Querschnitt 12 und einen Mantelbereich 14, wobei der Mantelbereich 14 größtenteils eine kreisförmige Form aufweist, welche durch eine Öffnung 16 durchbrochen ist. Der Bereich der dreieckigen Querschnittsfläche 12 und der Mantelbereich 14 sind einstückig aus einem Elastomermaterial 18 hergestellt. Angrenzend zu der Öffnung 16 weist der Mantelbereich 14 eine Krümmung 20 auf, die einen Fortsatz 22 des Mantelbereichs 14 in eine kreisförmige Aufnahme 24 der Dichtungsanordnung 10 umlegt, wobei ein L-förmiger Hohlraum 26 entsteht. Eine Länge des Fortsatzes 22 entspricht ungefähr einem Radius der kreisförmigen Aufnahme 24 mit einer Achse 38 als Mittelpunkt.

In den L-förmigen Hohlraum 26 ist ein Anschlussteil 28 eingeführt, wobei das Anschlussteil 28 als ein Klemmprofil 28 ausgebildet ist, welches ebenfalls abschnittsweise einen kreisförmigen Umfang mit der Öffnung 16 aufweist. Das Klemmprofil 28 ist benachbart zu der Öffnung 16 angeordnet und weist beidseitig L-förmige Rasten 30 auf, die in dem L-förmigen Hohlraum 26 aufgenommen sind. Das Klemmprofil 28 ist aus einem formsteifen Material wie beispielsweise Aluminium, Stahl oder Hartplastik hergestellt und bewirkt eine Formversteifung der Dichtungsanordnung 10. Der Radius der kreisförmigen Aufnahme 24 ist ungefähr 15 mal größer als eine Wanddicke des Klemmprofils 18, wobei die Wanddicke des Klemmprofils 18 im Bereich der Rasten 30 ungefähr verdoppelt ist.

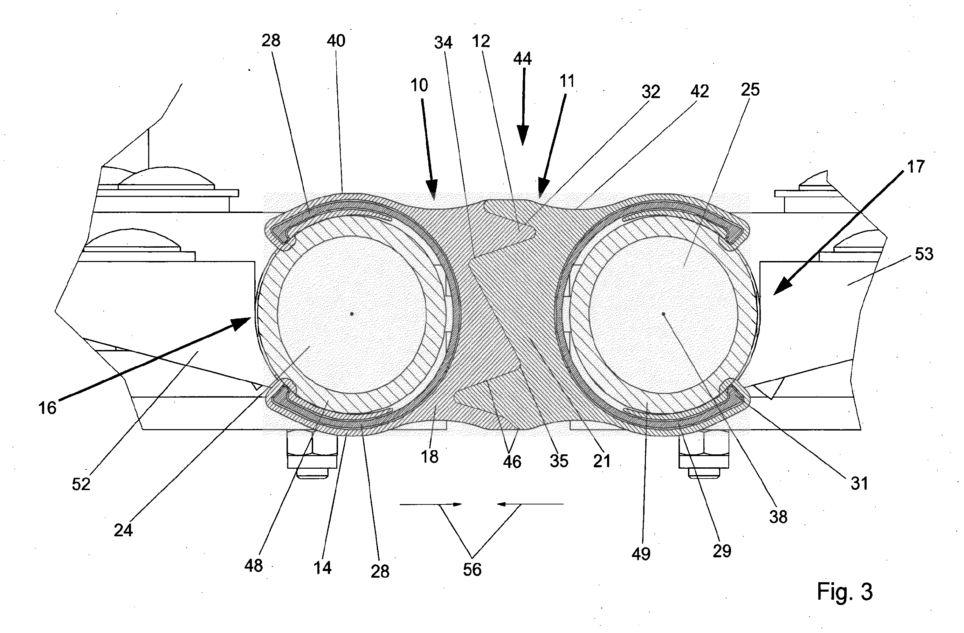

Auf der der Öffnung 16 abgewandten Seite weist die Dichtungsanordnung 10 im hügelförmigen Querschnitt 12 drei als Spitzen 35 ausgebildete Vorsprünge 32 und zwei als Täler 34 ausgebildete Vertiefungen 34 auf, wobei ein Formprofil der Vertiefungen 34 und der Vorsprünge 32 derart asymmetrisch ausgebildet ist, dass das Formprofil einer weiteren Dichtungsanordnung, welche um 180° um die Achse 38 rotiert wird, komplementär in das Querschnittsprofil der Dichtungsanordnung 10 einführbar ist, sodass die Spitzen 35 der Dichtungsanordnung 10 in die entsprechenden Täler 34 der weiteren Dichtungsanordnung einführbar sind und umgekehrt auch die jeweiligen Täler 34 der Dichtungsanordnung 10 in die entsprechenden Spitzen 35 der weiteren Dichtungsanordnung einführbar sind (vgl. auch Fig. 3).

Ein Abstand eines obersten Punktes einer der Spitzen 35 zu einem untersten Punkt einer der benachbarten Vertiefungen 34 ist kleiner als der Radius der kreisförmigen Aufnahme 24 mit der Achse 38 als Mittelpunkt. Die mittlere der drei Spitzen 35 weist eine Flanke mit einer Steigung auf, die in etwa sechsmal so groß ist wie die Steigung der weiteren Flanke auf der gegenüberliegenden Seite. Die Unterscheide der Steigungen der Flanken der beiden äußeren Spitzen 35 sind deutlich weniger stark ausgeprägt.

Eine Erstreckung der Dichtungsanordnung 10 verläuft parallel zur Achse 38. Eine Breite der Dichtungsanordnung 10, welche in etwa parallel zu einer Linie verläuft, welche die Spitzen 35 verbindet, im Bereich des dreieckigen Querschnitts 12 entspricht in etwa einer Breite des Mantelbereichs 14 der Dichtungsanordnung 10.

Entlang einer Außenseite 40, welche von den äußeren Vorsprüngen 32 zu dem Mantelbereich 14 führt, weist die Dichtungsanordnung 10 eine weitere Krümmung auf, welche als Rinne 42 ausgebildet ist. Ein Krümmungsradius der weiteren Krümmung 42 ist in etwa gleich groß wie der Radius der kreisförmigen Aufnahme 24.

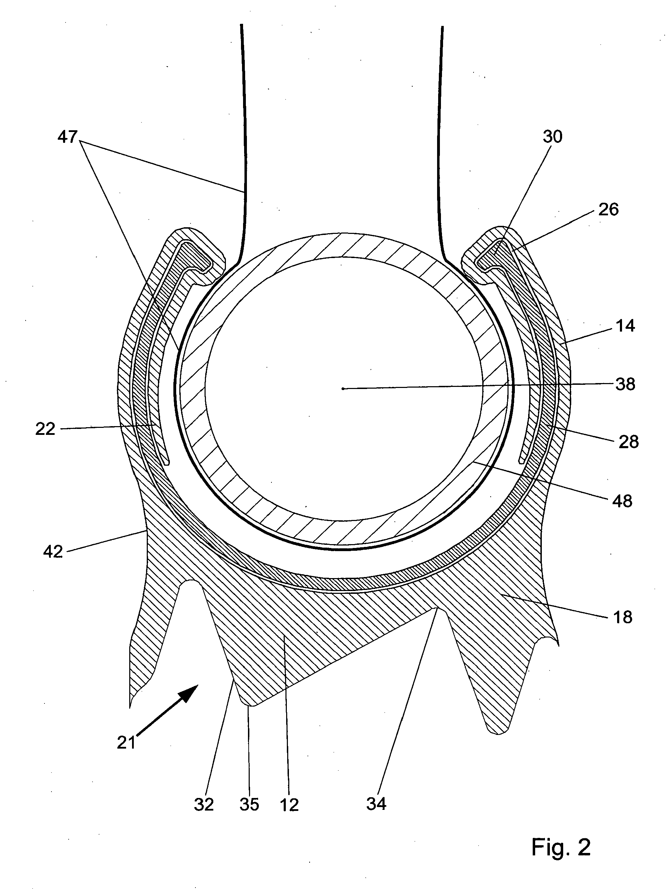

Fig. 2 zeigt einen Querschnitt der Dichtungsanordnung 10 aus Fig.1 mit einer Plane 47. Die Plane 47 bildet eine wasserundurchlässige Barriere aus und vermag deshalb beispielsweise einen Laderaum 84 vor Wasser zu schützen. In Fig. 2 ist zu erkennen, die Plane 47 um ein Aussteifungsglied 48 gelegt wird. Dieses Aussteifungsglied 48, welches vorliegend als ein Spriegel 48 ausgebildet ist, wird in die kreisförmigen Aufnahme 24 eingeführt, sodass sich die Plane 47 zwischen dem Klemmprofil 28 und dem Spriegel befindet und durch den Spriegel 48 klemmend in der kreisförmigen Aufnahme 24 festgehalten ist. Wird der Spriegel 48 verlagert, folgt die Plane 47 dieser Verlagerungsrichtung, wodurch die Plane 47 und die Dichtungsanordnung 10 den Laderaum 84 gegenüber der Umgebung abdichten. Durch das Einführen der Plane 47, welche um das Aussteifungsglied 48 gelegt ist, in die kreisförmige Aufnahme 24 wird zugleich eine wasserdichte Verbindung zwischen der Plane 47 und der Dichtungsanordnung 10 geschaffen, sodass der Laderaum 84 beispielsweise vor Regenwasser geschützt ist.

Fig. 3 zeigt einen Querschnitt eines Dichtungsverbunds 44, der die Dichtungsanordnung 10 gemäß Fig. 1 und eine weitere Dichtungsanordnung 11 umfasst. In Fig. 3 ist zu sehen, dass eine der beiden Dichtungsanordnungen 10, 11 180° um die Achse 38 rotiert ist, sodass der asymmetrisch ausgebildete dreieckige Querschnittsbereich 12 der ersten Dichtungsanordnung 10 in die weitere Dichtungsanordnung 11 komplementär einführbar ist, sodass die Vorsprünge 32 der ersten Dichtungsanordnung 10 in den Vertiefungen 34 der weiteren Dichtungsanordnung 11 in einem Stoßbereich 46 berührend anliegen. Hierbei wird durch die beiden Dichtungsanordnungen 10, 11 der Dichtverbund 44 ausgebildet, der eine wasserundurchlässige Barriere ausbildet. Es ist zu erkennen, dass die Rinnen 42 durch ihre Krümmung vorteilhaft verhindern, dass Wasser in Richtung des Stoßbereichs 46 läuft. Je stärker die Dichtungsanordnungen 10, 11, welche aus Elastomermaterial 18 bestehen, aneinander gedrückt werden, desto größer fällt die Krümmung der Rinne 42 aus, sodass das Wasser eine größere Höhe überwinden muss, um von einem tiefsten Punkt der Rinne 42 bis zu dem Stoßbereich 46 an der Außenseite 40 der Dichtungsanordnungen 10, 11 zu gelangen. In der Folge wird es also noch unwahrscheinlicher, dass Wasser aus der Rinne 42 in den Stoßbereich 46 gelangt.

Die weitere Dichtungsanordnung 11 weist eine im Wesentlichen im Querschnitt kreisförmige weitere Aufnahme 25 auf, welche durch die Öffnung 17 unterbrochen ist - analog zur Dichtungsanordnung 10 in Fig. 1. Die Öffnungen 16, 17 befinden sich jeweils auf einer Seite der Dichtungsanordnungen 10, 11, die den Vorsprüngen 32 und Vertiefungen 34 abgewandt ist. Die weitere Dichtungsanordnung 11 weist ein weiteres Anschlussteil 29 und weitere Rasten 31 auf. Durch die Rasten 30, 31 der Anschlussteile 28, 29 sind Aussteifungsglieder 48, 49, welche als Spriegel 48, 49 ausgebildet sind, in den kreisförmigen Aufnahmen 24, 25 kraftschlüssig aufgenommen. Dadurch wird verhindert, dass die Spriegel 48, 49 in einer Öffnungsrichtung wieder unbeabsichtigt aus den kreisförmigen Aufnahmen 24, 25 gleiten. Die Spriegel 48, 49 weisen hierbei einen kreisförmigen Querschnitt auf, wobei der kreisförmigen Querschnitt der Spriegel 48, 49 einen geringeren äußeren Radius aufweist als ein innerer Radius der kreisförmigen Aufnahmen 24, 25. Alternativ könne die Aussteifungsglieder 48,49 auch als Bügel oder Endglieder ausgebildet sein, wobei die Aussteifungsglieder 48, 49 bzw. die Spriegel 48, 49 aus einem formsteifen Material wie beispielsweise Aluminium oder Stahl hergestellt sind. Die Plane 47 aus Fig. 2 ist in Fig. 3 aus Gründen der Übersichtlichkeit zwar nicht gezeigt, aber dennoch wie in Fig. 2 gezeigt in den beiden kreisförmigen Aufnahmen 24, 25 vorgesehen. Die Spriegel 48, 49 sind jeweils mit einer Halterung 52, 53 verbunden. Werden die Halterungen 52, 53 in Richtung der Pfeile 56 verschoben, werden die Dichtungsanordnungen 10, 11 unter Ausübung eines Drucks so ineinander gedrückt, dass eine wasserdichte Barriere entsteht.

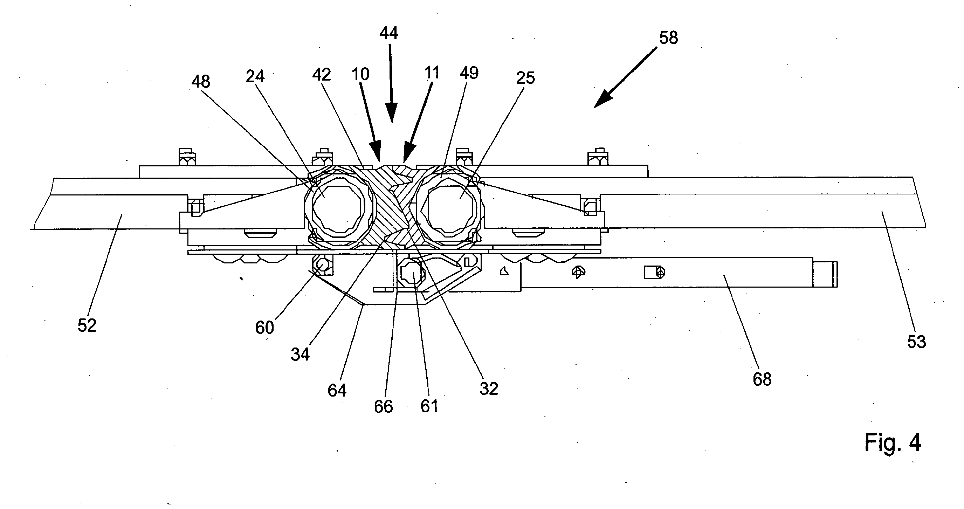

Fig. 4 zeigt eine Draufsicht auf eine Spannvorrichtung 58, die den Dichtverbund 44 aus Fig. 3 verspannt. Die Spanneinrichtung 58 umfasst eine erstes Scharnier 60 und ein zweites Scharnier 61, wobei beide Scharniere 60, 61 mittels eines Schutzbleches 64 verbunden sind. Zumindest eines der Scharniere 61 ist aus seiner Lagerung herausnehmbar, da die Dichtungsanordnungen 10, 11 ansonsten nicht entgegen der Spannrichtung der Spanneinrichtung 58 verlagerbar wären. Insbesondere beim Beladen eines Laderaums 84 müssen die Dichtungsanordnungen 10, 11 in entgegengesetzte Richtungen verlagerbar sein, wobei sich die Spanneinrichtung 58 je nach Konstruktion der Scharniere 60, 61 entweder mit der Dichtungsanordnung 10 oder mit der Dichtungsanordnung 11 mitbewegt. Bei einem Schließvorgang werden die Dichtungsanordnungen 10, 11 wieder aufeinander zu bewegt und das freie Scharnier 61 wieder in seine Lagerung verlagert, sodass ein Widerlager 66 für Verspannungskräfte ausbildet. Fig. 4 zeigt die Spannvorrichtung 58 und dadurch auch den Dichtverbund 44 in einer Schließstellung. Das zweite Scharnier 61 liegt an dem L-förmigen Widerlager 66 an. Indem ein Hebel 68 in eine Schließrichtung mittels einer Rotationsbewegung um das zweite Scharnier 61 in Richtung der Halterung 53 bewegt wird, übt das Widerlager 66 auf das zweite Scharnier 61 eine Kraft aus, die die Dichtungsanordnungen 10, 11 aufeinander zubewegt und zusammendrückt, sodass ein bündiger, wasserundurchlässiger Dichtungsverbund 44 entsteht. Das Schutzblech 64 ist so ausgebildet, dass es die Rotationsbewegung des Hebels 68 nicht behindert. Die Kraft wird durch eine Hebelwirkung zunächst auf die Halterungen 52, 53 übertragen, welche mit den Spriegeln 48, 49 verbunden sind und die ihrerseits die Kraft auf die Dichtungsanordnungen 10, 11 übertragen.

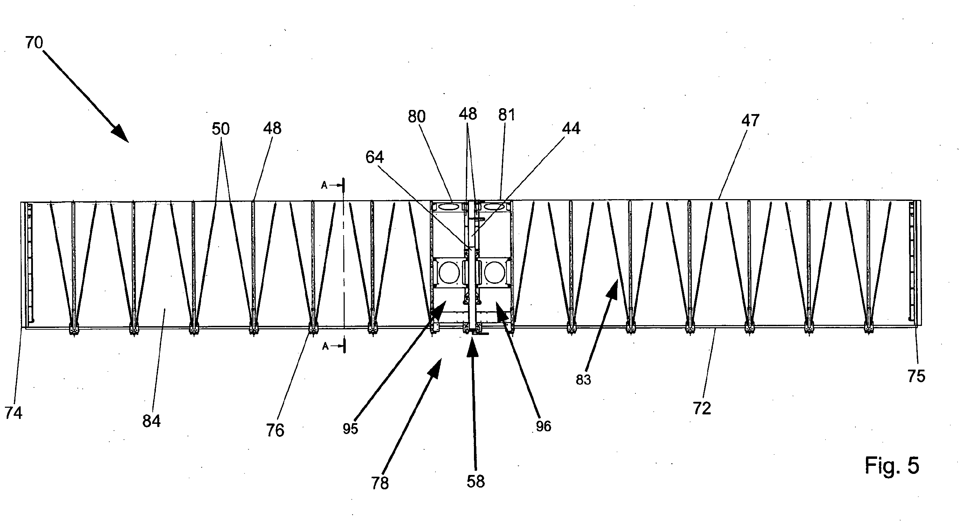

Fig. 5 zeigt eine Seitenansicht eines Planenaufbaus 70, wie er beispielsweise auf einem Bahnwaggon 89 oder einem LKW-Anhänger vorkommt. Auf Schienen 72, die als geradlinige metallische Stangen ausgebildet sind, sind mehrere U-förmige Spriegel 48 bzw. Bügel 48 und Hilfsbügel 50 angeordnet, wobei je ein Bügel 48 und je zwei Hilfsbügel 50 V-förmig an einem gemeinsamen Schlitten 76 abstehen. Endseitig wird der Planenaufbau 70 durch ein erstes abbaubares Endglied 74 und auf der anderen Seite durch ein zweites abbaubares Endglied 75 begrenzt. Die Plane 47 überdeckt einen Laderaum 84 und schützt diesen vor Wasser. Die Plane 47 überdeckt den Planenaufbau 70 auch seitlich. Dies ist jedoch in Fig. 5 nicht gezeigt, da sonst die restlichen Bauteile wie etwa die Spriegel 48 bzw. Bügel 48 durch die Plane 47 verdeckt wären. Zwei Planen 47 überdecken den Laderaum 84, wobei beide Planen 47 jeweils mit einem Endglied 74, 75 und einer Dichtungsanordnung 10, 11 des Dichtverbunds 44 gemäß Fig. 2 verbunden sind. Die Spriegel 48 bzw. Bügel 48 und die Hilfsbügel 50 sind über verlagerbare Schlitten 76 mit Führungen 72, welche als Schienen 72 ausgebildet sind, verbunden.

Ungefähr in der Mitte des Laderaums 84 ist ein zentraler Aufbau 78 angeordnet, der vier Spriegel 48, zwei seitliche Verstrebungen 80, 81, den Dichtverbund 44 gemäß Fig. 3 mit zwei Dichtungsanordnungen 10, 11 gemäß Fig. 1 und Fig. 3 und die Spanneinrichtung 58 gemäß Fig. 4 umfasst. Hierbei sind jeweils zwei Spriegel 48 mit einer der seitlichen Verstrebungen 80, 81 verbunden, sodass diese jeweils eine bezüglich der Schiene 72 verlagerbare Einheit 95, 96 bilden, welcher jeweils eine Dichtungsanordnung 10, 11 zugeordnet ist. Die Scharniere 60, 61 der Spanneinrichtung sind jeweils an einer der Einheiten angeordnet, sodass die Spanneinrichtung 58 die beiden Einheiten 95,96 so gegeneinander verspannen kann, dass der Dichtungsverbund 44 ausgebildet wird, welcher eine wasserdichte Barriere ausbildet. Sowohl an den zueinander zugekehrten Seiten als auch an den zueinander abgekehrten Seiten der seitlichen Verstrebungen 80, 81 sind jeweils Spriegel 48 angeordnet, welche U-förmig von einer Seite des Bahnwaggons 89 auf die andere Seite verlaufen und dadurch eine Art Dach ausbilden. Der Dichtungsverbund 44 umrandet im Wesentlichen die gesamte U-förmige Erstreckung der Spriegel 48, sodass ein Rundumschutz gegenüber Regen - oder Spitzwasser gegeben ist. Das Schutzblech 64 erstreckt sich im Wesentlichen auf beiden Seiten des Bahnwaggons 89 beginnend von den Schienen 72 entlang beider geradliniger Abschnitte der U-förmigen Spriegel 48. Das Schutzblech 64 hat sowohl eine optische Funktion als auch einer Schutzfunktion für den empfindlicheren Dichtungsverbund 44, welcher aus dem Elastomermaterial 18 besteht. Wird die Spannvorrichtung 58 gelöst, können die Einheiten 95, 96 in Richtung der jeweiligen Endglieder 74, 75 verlagert werden. Durch die Möglichkeit den Planenaufbau 70 von der Mitte aus öffnen zu können, ist es möglich Gegenstände bis zu einer Länge von über 22 m in den Laderaum 84 zu verlagern.

Alternativ und/oder zusätzlich kann auch jeweils ein Dichtungsverbund 44 an den Endgliedern 74, 75 angebracht sein, sodass der Planenaufbau 70 auch von den Endseiten her geöffnet werden kann, was eine größere Flexibilität bei einem Beladevorgang gewährt.

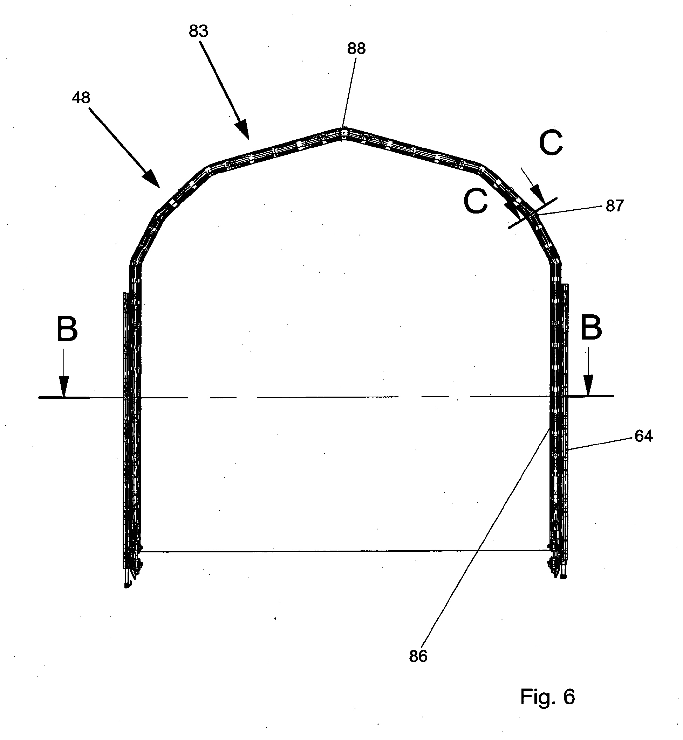

Fig. 6 zeigt einen Längsschnitt des Planenaufbaus 70 entlang der Achse A aus Fig. 5. Der Längsschnitt zeigt einen U-förmigen Spriegel 48, der an beiden unteren Bereichen 86 einen geradlinigen Verlauf aufweist, wobei der geradlinige Verlauf auf beiden Seiten in einen gebogenen Bereich 87 des Spriegels 48 übergeht, wobei sich die beiden gebogenen Bereiche 87 in einem oberen Bereich 88 des Spriegels 48 mittig treffen. Vorliegend ist der Spriegel 48 einstückig ausgebildet und der Dichtverbund 44 verläuft im Wesentlichen über einen gesamten Verlauf des Spriegel 48, wobei die Dichtungsanordnung 10 in den geradlinigen Bereichen, wie beispielsweise in einem Querschnitt entlang Richtung B in Fig. 6, ein als Klemmprofil 28 ausgebildetes Anschlussteil 28 wie in Fig. 1, 2 und 3 aufweisen. In einem gebogenen Bereich, wie beispielsweise in einem Querschnitt entlang Richtung C, weist der Spriegel 48 eine Dichtungsanordnung 10 ohne ein als Klemmprofil 28 ausgebildetes Anschlussteil 28 auf, da das versteifende Klemmprofil 28, wenn es als ein gerades zylindrisches Rohr ausgebildet ist, eine Krümmung des Spriegels 48 behindert.

Alternativ kann ein zylindrisches Rohr als Klemmprofil 28 verwendet werden, das eine Krümmung aufweist, welche an die Krümmung der Spriegel 48 angepasst ist. Dadurch ist es auch möglich, ein Klemmprofil 28 in den gebogenen Bereichen innerhalb der Dichtungsanordnung 10 zu verwenden.

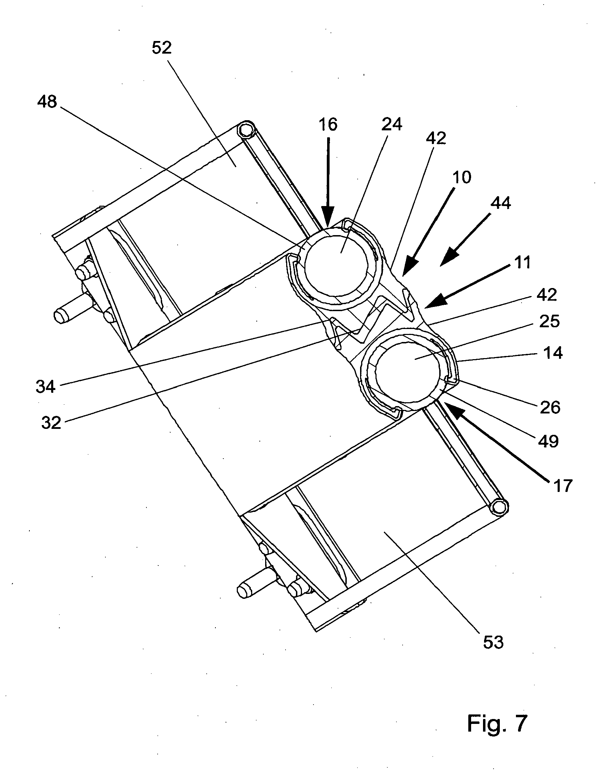

Fig. 7 zeigt eine Detailansicht eines Dichtverbunds 44 entlang der Achse C aus Fig. 6. Im Unterschied zu dem in Fig.'3 gezeigten Dichtverbund 44 ist kein als Klemmprofil ausgebildetes Anschlussteil 28 in die Mantelbereiche 14 der Dichtungsanordnungen 10, 11 aufgenommen, sodass eine Krümmung des Spriegels 48 in Fig. 6 leichter ermöglicht wird.

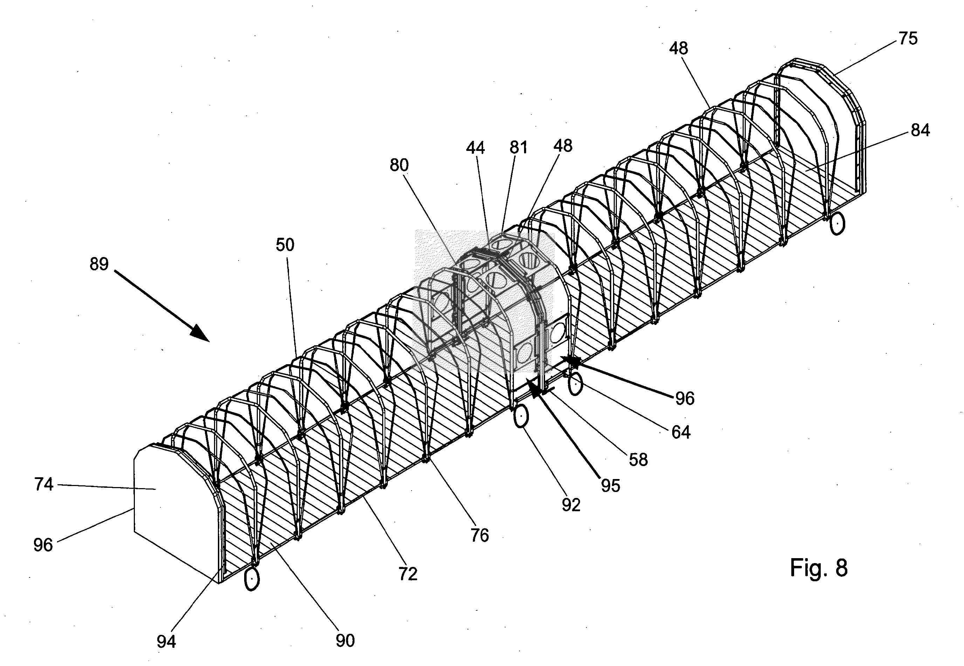

Fig. 8 zeigt eine perspektivische Ansicht eines Bahnwaggons 89. Es ist zu sehen, dass die Spriegel 48 den Laderaum 84 U-förmig umfassen und dass der Bahnwaggon 89 auf beiden Seiten 94, 96 baugleich ausgebildet ist. Zusätzlich zu dem Planenaufbau gemäß Fig.5 mit den Dichtungsanordnungen gemäß Fig. 1 und 2 und dem Dichtverbunds 44 gemäß Fig. 3 umfasst der Bahnwaggon 89 noch einen Boden 90 für den Laderaum 84 und Räder 92 zur Verringerung eines Rollwiederstands.

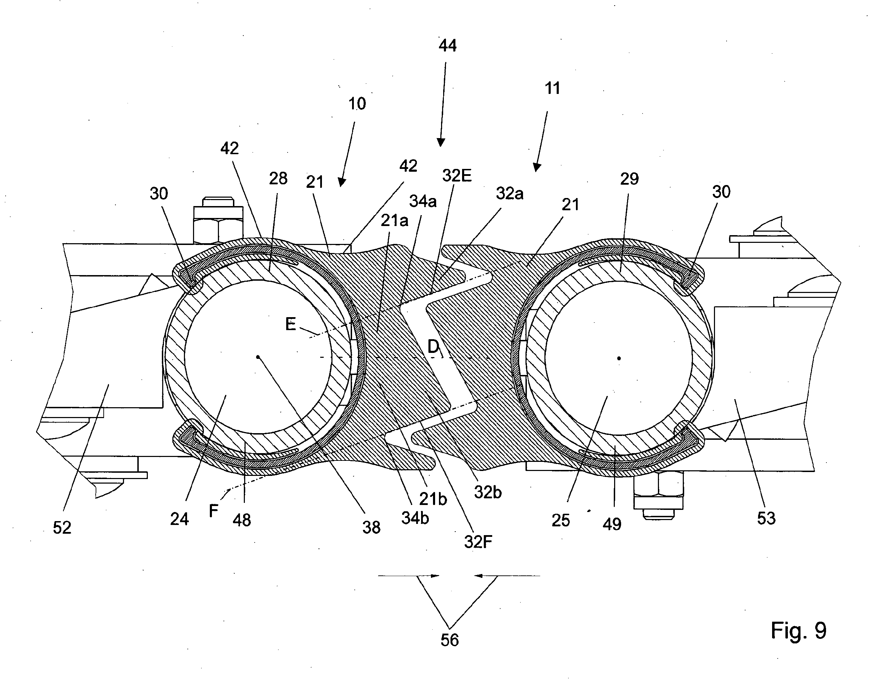

Fig. 9 zeigt vergleichbar mit Fig. 3 einen Querschnitt entlang einer Ebene senkrecht zur der Erstreckungsrichtung von Dichtstreifen 21 eines Dichtungsverbundes 44, der die Dichtungsanordnung 10 gemäß Fig. 1 und eine weitere identisch ausgebildete Dichtungsanordnung 11 umfasst. In Fig. 9 ist zu sehen, dass die Dichtungsanordnung 10 um 180° um die Längsachse 38 des hohlzylindrisch ausgebildeten Aussteifungsgliedes 48 gegenüber der weiteren Dichtungsanordnung 11 rotiert ist, sodass sich die beiden an den Aussteifungsgliedern 48, 49 durch die Rasten 30, 31 der Anschlussteile 28, 29 befestigten identisch ausgebildeten Dichtstreifen 21 gegenüberliegen. Im Gegensatz zu dem in Fig. 3 gezeigten Ausführungsbeispiels eines Dichtungsverbundes 44 sind die beiden Dichtungsanordnungen 10, 11 nicht so weit in Richtung der Pfeile 56 verschoben, dass sich die jeweiligen Dichtstreifen 21 berühren.

Der Dichtstreifen 21, welcher der Dichtungsanordnung 10 zugeordnet ist, weist dabei einen entlang der Erstreckung des Dichtstreifens 21, welche in Richtung der Längsachse 38 weist, verlaufenden ersten Vorsprung 32a und zweiten Vorsprung 32b auf. Weiterhin weist der Dichtstreifen 21 eine erste Vertiefung 34a und eine zweite Vertiefung 34b auf. Die Vorsprünge 32a, 32b weisen dabei einen im Wesentlichen dreieckigen Querschnitt auf. Die erste Vertiefung 34a ist dabei derart ausgebildet, dass diese als Negativform des zweiten Vorsprungs 32b ausgebildet ist. Die zweite Vertiefung 34b ist derart ausgebildet, dass diese als Negativform des ersten Vorsprungs 32a ausgebildet ist.

Bei entsprechender Verschiebung der beiden Dichtungsanordnung in Richtung der Pfeile 56 hat die zueinander komplementäre Ausbildung der Vorsprünge 32a, 32b und der Vertiefungen 34a, 34b zur Folge, dass die ersten und zweiten Vorsprünge 32a, 32b und die ersten und zweiten Vertiefungen 34a, 34b ineinander passend eine Abdichtung ermöglichen. Der Dichtstreifen weist, wie bereits in Fig. 3 gezeigt, eine Rinne 42 an einer zu den Vorsprüngen 32a, 32b im Wesentlichen senkrechten Außenseite 40 des Dichtstreifens 21 auf welche dazu dienen, dass Wasser eine größere Höhe überwinden muss, um von einem tiefsten Punkt der Rinne 42 bis zu dem höchsten Punkt an der Außenseite 40 der Dichtungsanordnungen 10, 11 zu gelangen.

Der in Fig. 9 gezeigte Dichtstreifen 21 weist einen ersten Abschnitt 21a und einen zweiten Abschnitt 21b auf, welche durch die Ebene D, welche parallel zu der Erstreckung des Dichtstreifens 21 verläuft, voneinander abgegrenzt sind. Der erste Abschnitt 21a bildet hierbei die Negativform des zweiten Abschnitts 21b. Eine Flanke (32E) des ersten Vorsprungs 32a und eine Flanke (32F) des zweiten Vorsprungs 32b liegen dabei in den zueinander parallelen Ebene E und F.

Die Plane 47 aus Fig. 2 ist in wie auch in Fig. 3 in Fig. 9 aus Gründen der Übersichtlichkeit zwar nicht gezeigt, aber dennoch wie in Fig. 2 gezeigt, in den beiden kreisförmigen Aufnahmen 24, 25 vorgesehen. Die als Spriegel ausgebildeten Aussteifungsglieder 48, 49 sind jeweils mit einer Halterung 52, 53 verbunden. Werden die Halterungen 52, 53 in Richtung der Pfeile 56 verschoben, werden die Dichtungsanordnungen 10, 11 unter Ausübung eines Drucks so ineinander gedrückt, dass eine wasserdichte Barriere entsteht.

Die Erfindung funktioniert nun wie folgt:
Es wird ein Bahnwaggon 89 bereitgestellt. Zunächst wird eine als Schiene ausgebildete Führung 72 (wie in Fig. 5) mit dem Bahnwaggon 89 verbunden, wobei die Führung 72 vorzugsweise verschraubt wird und über eine gesamte Längserstreckung des Bahnwaggons 89 ausgebildet ist. In einem nächsten Schritt werden auf jeweils einer von zwei Endseiten des Bahnwaggons 89 zwei Spriegel 48 auf jeweils eine verlagerbaren Schlitten 76 an den Führungen 72 angebracht, wobei die Spriegel 48 jeweils mit einer seitlichen Verstrebung 80, 81 verbunden werden. Eine solche Kombination aus zwei Spriegeln 48 und einer der seitlichen Verstrebung 80, 81 bildet jeweils eine Einheit 95, 96 aus.

An zueinander zugekehrten Stirnflächen der Einheiten 95, 96 werden in einem nächsten Schritt Dichtungsanordnungen 10, 11 an den Spriegeln 48 angebracht, sodass Dichtstreifen 21 der jeweiligen Dichtungsanordnung 10, 11 einander zugekehrt sind. Die Spriegel 48 können in Aufnahmen 24 der Dichtungsanordnungen eingedrückt, aufgeschraubt oder eingeklopft werden. Die Einheiten 95, 96 werden nun in Richtung einer Mitte des Bahnwaggons 89 verlagert.

In einem nächsten Schritt werden weitere verlagerbare Schlitten 76 auf der Führung 72 angebracht. An jeden dieser Schlitten 76 wird mittig ein Spriegel 48 und seitlich versetzt davon beidseitig jeweils ein Hilfsbügel 50 angebracht, wobei die Hilfsbügel 48 um ihre Anlenkung zumindest teilweise rotieren können. Als nächstes werden Endglieder 74, 75 angeschraubt und eine Plane 47 sowohl an den Endgliedern 74, 75 als auch an den Dichtungsanordnungen 10, 11 befestigt.

Die Einheiten 95, 96 werden als nächstes in Richtung der Endglieder 74, 75 zu ihren endseitigen Stellungen verfahren. Das bedeutet, die Einheit 95 befindet sich in der Nachbarschaft des Endglieds 74 und die Einheit 96 befindet sich in der Nachbarschaft des Endglieds 75. Ein Gegenstand kann nun auf den Laderaum 84 geladen werden.

Zum Verschließen werden die beiden Einheiten 95, 96 mittels der Schlitten 76 aus ihren endseitigen Stellungen in Richtung der Mitte des Laderaums 84 aufeinander zubewegt. Sind die Einheiten 95, 96 nah genug beieinander, wird die Spanneinrichtung 58 verwendet, um den wasserundurchlässigen Dichtverbund 44 zu verspannen und den Laderaum 84 abzudichten und zu verschließen.

Zusätzlich besteht auch die Möglichkeit jeweils eine Spannvorrichtung 58 an den Endgliedern 74, 75 anzubringen, sodass der Bahnwaggon 89 wahlweise an einer der beiden Endseiten oder in der Mitte öffenbar ist, was eine hohe Verladungsflexibilität bietet.

## Patentansprüche

1. Dichtungsanordnung zum Anschluss an ein bewegliches oder feststehendes Aussteifungsglied (48) eines Planenaufbaus (70), umfassend
einen Dichtstreifen (21),
wobei der Dichtstreifen (21) zumindest entlang einer Erstreckung des Dichtstreifens (21) verlaufende erste und zweite Vorsprünge (32) und zumindest entlang der Erstreckung des Dichtstreifens (21) verlaufende erste und zweite Vertiefungen (34) aufweist,
wobei die Vorsprünge (32) und die Vertiefungen (34) derart komplementär ausgebildet sind, dass jeweils jede der ersten und zweiten Vertiefungen (34) als Negativform eines der Vorsprünge (32) ausgebildet ist und ineinander passend eine Abdichtung ermöglichen,
wobei der Dichtstreifen einen Mantelbereich (14) und an der den Vorsprüngen (32) abgewandten Seite der Dichtungsanordnung eine Aufnahme (24) umfasst,
**dadurch gekennzeichnet,**
**dass** die Aufnahme kreisförmig ausgebildet ist,
**dass** der Mantelbereich (14) größtenteils eine kreisförmige Form aufweist, welche durch eine Öffnung (16) durchbrochen ist, und
**dass** der Mantelbereich (14) angrenzend zu der Öffnung (16) eine Krümmung (20) aufweist, die einen Fortsatz (22) des Mantelbereiches (14) in die kreisförmige Aufnahme (24) der Dichtungsanordnung umlegt.

2. Dichtungsanordnung nach Anspruch 1, **dadurch gekennzeichnet, dass** der Dichtstreifen (21) drei Vorsprünge (32) und jeweils eine Vertiefung (34) zwischen zwei benachbarten Vorsprüngen (32) entlang seiner Erstreckung aufweist.

3. Dichtungsanordnung nach einem der vorhergehenden Ansprüche,
**dadurch gekennzeichnet, dass** der Dichtstreifen (21) zumindest eine Rinne (42) aufweist, die entlang der Erstreckung des Dichtstreifens (21) verläuft, und dass die Rinne (42) an einer zu den Vorsprüngen (32) und Vertiefungen (34) im Wesentlichen senkrechten Außenseite (40) des Dichtstreifens (21) angeordnet ist.

4. Dichtungsanordnung nach einem der vorhergehenden Ansprüche,
**dadurch gekennzeichnet, dass** der Dichtstreifen (21) einen durch eine Ebene (D) parallel zu der Erstreckung des Dichtstreifens (21) abgegrenzten ersten Abschnitt (21a) und einen zweiten Abschnitt (21b) aufweist, und dass der erste Abschnitt (21 a) die Negativform des zweiten Abschnitts (21b) bildet.

5. Dichtungsanordnung nach einem der vorhergehenden Ansprüche,
**dadurch gekennzeichnet, dass** die Vorsprünge (32) des Dichtstreifens (21) einen im Wesentlichen hügelförmigen, insbesondere dreieckigen, Querschnitt (12) aufweisen.

6. Dichtungsanordnung nach Anspruch 5, **dadurch gekennzeichnet, dass** zumindest eine Flanke (32E) von einem von ersten und zweiten Vorsprüngen und zumindest eine Flanke (32F) von dem anderen von ersten und zweiten Vorsprüngen in parallelen Ebenen (E,F) liegen.

7. Dichtungsanordnung nach einem der vorhergehenden Ansprüche,
**dadurch gekennzeichnet, dass** an der den Vorsprüngen (32) abgewandten Seite des Dichtstreifens (21) ein Anschlussteil (28) in dem Mantelbereich (14) des Dichtstreifens (21) angeordnet ist.

8. Dichtungsanordnung nach einem der vorhergehenden Ansprüche,
**dadurch gekennzeichnet, dass** die Aufnahme (24) für ein Aussteifungsglied (48) wie einen Spriegel oder Bügel vorgesehen ist.

9. Dichtungsanordnung nach einem der vorhergehenden Ansprüche,
**dadurch gekennzeichnet, dass** der Dichtstreifen (21) aus einem deformierbaren Elastomermaterial besteht.

10. Dichtverbund, **gekennzeichnet durch** zwei Dichtungsanordnungen (10; 11) nach einem der Ansprüche 1 bis 9.

11. Planenaufbau für ein Transportfahrzeug (89), insbesondere einen Bahnwaggon (89), umfassend
ein Verdeckgestell (83) mit zumindest einem endseitigen Aussteifungsglied (48) für den Anschluss einer Plane (47),
wobei das Aussteifungsglied (48) beidseitig mit jeweils einem Schlitten (76), der entlang von Führungen (72) verlagerbar ist, versehen ist, **dadurch gekennzeichnet,**
**dass** zumindest an dem endseitigen Aussteifungsglied (48) eine Dichtungsanordnung (10) nach einem der Ansprüche 1 bis 9 angeschlossen ist

12. Planenaufbau nach Anspruch 11, **dadurch gekennzeichnet, dass** die Dichtungsanordnung (10) in dem Mantelbereich (14) ein Anschlussteil (28) aufweist.

13. Planenaufbau nach Anspruch 12, **dadurch gekennzeichnet, dass** das Anschlussteil (28) ein an den Umfang des Aussteifungsglieds (48) angepasstes Querschnittsprofil aufweist, wobei das Querschnittsprofil eine Öffnung (16) in Richtung des Aussteifungsglieds (48) aufweist.

14. Planenaufbau nach einem der Ansprüche 12 bis 13, **dadurch gekennzeichnet, dass** die Plane (47) zwischen dem Aussteifungsglied (48) und dem Anschlussteil (28) festgelegt ist.

15. Planenaufbau nach einem der Ansprüche 11 bis 14, **dadurch gekennzeichnet, dass** ein weiterer Dichtstreifen (21) an einem beweglichen oder festen Bauteil angeordnet ist, und dass beide Dichtstreifen (21) mittels einer Spanneinrichtung (58) gegenseitig abdichtend verspannbar sind.

## Claims

1. Seal arrangement for connecting to a movable or stationary stiffening member (48) of a tarpaulin structure (70), comprising
a sealing strip (21),
wherein the sealing strip (21) has first and second projections (32) which run at least along an extent of the sealing strip (21) and first and second depressions (34) which run at least along the extent of the sealing strip (21),
wherein the projections (32) and the depressions (34) are of complementary configuration such that each of the first and second depressions (34) respectively is configured as a negative form of one of the projections (32) and, fitting into one another, make a seal possible, wherein the sealing strip comprises a casing region (14) and a receptacle (24) on the side of the seal arrangement facing away from the projections (32),
**characterized in**
**that** the receptacle is of circular shape,
**that** the casing region (14) has mostly a circular shape which is breached by way of an opening (16), and
**that** adjacent to the opening (16), the casing region (14) has a curvature (20), which curvature (20) folds an extension (22) of the casing region (14) into the circular receptacle (24) of the seal arrangement.

2. Seal arrangement according to claim 1, **characterized in that** the sealing strip (21) has three projections (32) and one depression (34) respetively between two adjacent projections (32) along its extent.

3. Seal arrangement according to one of the preceding claims,
**characterized in that** the sealing strip (21) has at least one channel (42) which runs along the extent of the sealing strip (21), and that the channel (42) is arranged on an outer side (40) of the sealing strip (21), which outer side (40) is substantially perpendicular with respect to the projections (32) and depressions (34).

4. Seal arrangement according to one of the preceding claims,
**characterized in that** the sealing strip (21) has a first section (21a) delimited by way of a plane (D) parallel to the extent of the sealing strip (21) and a second section (21b), and that the first section (21a) forms the negative form of the second section (21b).

5. Seal arrangement according to one of the preceding claims,
**characterized in that** the projections (32) of the sealing strip (21) have a substantially hill-shaped, in particular triangular, cross section (12).

6. Seal arrangement according to claim 5, **characterized in that** at least one flank (32E) of one of the first and second projections and at least one flank (32F) of the other one of the first and second projections lie in parallel planes (E, F).

7. Seal arrangement according to one of the preceding claims,
**characterized in that** a connector part (28) is arranged in the casing region (14) of the sealing strip (21) on that side of the sealing strip (21) which faces away from the projections (32).

8. Seal arrangement according to one of the preceding claims,
**characterized in that** the receptacle (24) is provided for a stiffening member (48) such as a hoop or bow.

9. Seal arrangement according to one of the preceding claims,
**characterized in that** the sealing strip (21) consists of a deformable elastomer material.

10. Composite seal, **characterized by** two seal arrangements (10; 11) according to one of claims 1 to 9.

11. Tarpaulin structure for a transport vehicle (89), in particular a railway car (89), comprising
a tarpaulin framework (83) with at least one end-side stiffening member (48) for the connection of a tarpaulin (47),
wherein the stiffening member (48) is respectively provided on both sides with a slide (76) which can be moved along guides (72),
**characterized in**
**that** a seal arrangement (10) according to one of claims 1 to 9 is connected at least to the end-side stiffening member (48).

12. Tarpaulin structure according to claim 11, **characterized in that** the seal arrangement (10) has a connector part (28) in the casing region (14).

13. Tarpaulin structure according to claim 12, **characterized in that** the connector part (28) has a cross-sectional profile which is adapted to the perimeter of the stiffening member (48), wherein the cross-sectional profile has an opening (16) in the direction of the stiffening member (48).

14. Tarpaulin structure according to one of claims 12 to 13, **characterized in that** the tarpaulin (47) is fixed between the stiffening member (48) and the connector part (28).

15. Tarpaulin structure according to one of claims 11 to 14, **characterized in that** a further sealing strip (21) is arranged on a movable or fixed component, and that the two sealing strips (21) can be braced mutually in a sealing manner by means of a clamping device (58).

## Revendications

1. Ensemble d'étanchéité destiné à être raccordé à un élément raidisseur (48) mobile ou fixe d'une structure de bâche (70), l'ensemble d'étanchéité comprenant
une bande d'étanchéité (21),
la bande d'étanchéité (21) comportant des première et deuxième saillies (32) qui s'étendent au moins le long d'une extension de la bande d'étanchéité (21) et des premier et deuxième évidements (34) qui s'étendent au moins le long de l'extension de la bande d'étanchéité (21), les saillies (32) et les évidements (34) étant formés de manière complémentaire de sorte que chacun des premier et deuxième évidements (34) soit conçu comme le négatif de l'une des saillies (32) et permet un emboîtement étanche,
la bande d'étanchéité comprenant une région d'enveloppe (14) et un logement (24) du côté de l'ensemble d'étanchéité qui est à l'opposé des saillies (32),
**caractérisé en ce**
**que** le logement est de forme circulaire,
**que** la région d'enveloppe (14) a en grande partie une forme circulaire qui est percée d'une ouverture (16), et
**que** la région d'enveloppe (14) présente une courbure (20), adjacente à l'ouverture (16), qui entoure un prolongement (22) de la région d'enveloppe (14) qui pénètre dans le logement circulaire (24) de l'ensemble d'étanchéité.

2. Ensemble d'étanchéité selon la revendication 1, **caractérisé en ce que** la bande d'étanchéité (21) comporte trois saillies (32) et un évidement (34) respectivement entre deux saillies (32) adjacentes le long de son extension.

3. Dispositif d'étanchéité selon l'une des revendications précédentes,
**caractérisé en ce que** la bande d'étanchéité (21) comporte au moins une gorge (42) qui s'étend dans l'extension de la bande d'étanchéité (21), et que la gorge (42) est disposée sur un côté extérieur (40) de la bande d'étanchéité (21) qui est sensiblement perpendiculaire aux saillies (32) et aux évidements (34).

4. Ensemble d'étanchéité selon l'une des revendications précédentes,
**caractérisé en ce que** la bande d'étanchéité (21) comporte une première partie (21a) délimitée par un plan (D) parallèle à l'extension de la bande d'étanchéité (21) et une deuxième partie (21b), et que la première partie (21a) forme le négatif de la deuxième partie (21b).

5. Ensemble d'étanchéité selon l'une des revendications précédentes,
**caractérisé en ce que** les saillies (32) de la bande d'étanchéité (21) ont une section transversale (12) sensiblement en forme de monticule, notamment de triangle.

6. Ensemble d'étanchéité selon la revendication 5, **caractérisé en ce qu'**au moins un flanc (32E) de l'une des première et deuxième saillies et au moins un flanc (32F) de l'autre des première et deuxième saillies sont situés dans des plans parallèles (E, F).

7. Ensemble d'étanchéité selon l'une des revendications précédentes,
**caractérisé en ce que**, du côté de la bande d'étanchéité (21) qui est opposé aux saillies (32), un élément de raccordement (28) est disposé dans la région d"enveloppe (14) de la bande d'étanchéité (21).

8. Ensemble d'étanchéité selon l'une des revendications précédentes,
**caractérisé en ce que** le logement (24) est destiné à un élément raidisseur (48) tel qu'un arceau ou une armature.

9. Dispositif d'étanchéité selon l'une des revendications précédentes,
**caractérisé en ce que** la bande d'étanchéité (21) est en une matière élastomère déformable.

10. Composite d'étanchéité, **caractérisé par** deux ensembles d'étanchéité (10; 11) selon l'une des revendications 1 à 9.

11. Structure de bâche destinée à un véhicule de transport (89), en particulier un wagon ferroviaire (89), ladite structure de bâche comprenant
un bâti de capote (83) muni d'au moins un élément raidisseur côté extrémité (48) destiné au raccordement d'une bâche (47),
l'élément raidisseur (48) étant muni de chaque côté d'un chariot respectif (76) qui peut être déplacé le long de guides (72),
**caractérisée en ce**
**qu'**un ensemble d'étanchéité (10) selon l'une des revendications 1 à 9 est raccordé au moins à l'élément raidisseur côté extrémité (48).

12. Structure de bâche selon la revendication 11, **caractérisée en ce que** l'ensemble d'étanchéité (10) comporte dans la région d'enveloppe (14) un élément de raccordement (28).

13. Structure de bâche selon la revendication 12, **caractérisée en ce que** l'élément de raccordement (28) présente un profil en coupe transversale qui est adapté à la périphérie de l'élément raidisseur (48), le profil en coupe transversale comportant une ouverture (16) en direction de l'élément raidisseur (48).

14. Structure de bâche selon l'une des revendications 12 à 13, **caractérisée en ce que** la bâche (47) est fixée entre l'élément raidisseur (48) et l'élément de raccordement (28).

15. Structure de bâche selon l'une des revendications 11 à 14, **caractérisée en ce qu'**une autre bande d'étanchéité (21) est disposée sur un composant mobile ou fixe, et que les deux bandes d'étanchéité (21) sont serrées de façon étanche l'une contre l'autre au moyen d'un dispositif de serrage (58).
